# EUROPEAN PATENT APPLICATION

(11) **EP 0 728 912 A2**
(43) Date of publication of application: **28.08.1996**
(21) Application number: 96300092.2
(22) Date of filing: 04.01.1996
(51) Int. Cl.: E21B 10/54, E21B 10/60, B22C 9/04

(54) **Method of manufacturing a rotary drill bit**

(30) Priority: 07.01.1995 GB 9500286
(71) Applicant: CAMCO DRILLING GROUP LIMITED, Stonehouse, Gloucestershire GL10 3RQ (GB)
(72) Inventor: Taylor, Malcolm R., Gloucester (GB)
(74) Representative: Carter, Gerald

(57) **Abstract**

A method of manufacturing a drag-type rotary drill bit comprises creating a three-dimensional computerised model of the bit body, employing the computerised model in a computer-controlled process to create a three-dimensional physical model (22) of the bit body from physical material, using the three-dimensional physical model to form an operative hollow mould (23) of complementary shape to the bit body, and then moulding in the mould a reproduction of the bit body in a material suitable for use in an operative drill bit. Alternatively, the method may be used to produce a three-dimensional physical model (26) of a hollow mould, and using this mould to create a bit-shaped former (27) which is then used to create an operative mould (28) for moulding the actual bit body.

## Description

The invention relates to the manufacture of rotary drill bits for use in drilling or coring deep holes in subsurface formations. The invention is particularly applicable to rotary drag-type drill bits of the kind comprising a bit body on which are mounted a plurality of cutters for cutting or abrading the formation being drilled, and an inner passage for supplying fluid to one or more nozzles mounted at the external surface of the bit.

In some drill bits of this kind the bit body is machined from metal, usually steel, sockets being machined in the bit body, some to receive the nozzles and some to receive cutters or studs or posts on which the cutters are mounted. The present invention, however, relates to drill bits where the bit body, or a part thereof, is moulded or cast. For example, in one well known form of construction the bit body is formed by a powder metallurgy process. In this process a hollow mould in the configuration of the bit body, or a part thereof, is packed with powdered material, such as tungsten carbide, which is then infiltrated with a molten metal alloy, such as a copper alloy, in a furnace so as to form a hard solid infiltrated matrix.

In order to manufacture a bit body by a moulding or casting process it is necessary to create a hollow mould which is complementary in shape to the desired shape of the bit body. The mould requires to be of a material of a kind which will withstand the temperatures and stresses of the moulding process and the moulds are therefore usually made from refractory materials. The bit body, and hence the mould, is usually complex in shape and hitherto various methods have been used for the manufacture of the complex mould.

For example, the mould may be formed by fabrication or by machining from a blank but a preferred process involves moulding the mould itself from a male former in the shape of the bit body. In one such method the male former is formed in multiple parts which may be disassembled for removal from the mould which has been formed around the former, and such formers require the skill and time of a toolmaker. Alternatively, the male former may be flexible or manufactured from a disposable material so that it may be removed from the mould by deformation or by destruction. In this case it is necessary first to produce a master mould in which flexible or disposable formers may be moulded for subsequent use in the creation of further production moulds.

The disadvantage of all these systems is the time required to produce the original male former or female mould by conventional tool making methods. In addition, errors of shape may be introduced into the former or mould during its manufacture by the tool maker or pattern maker. Attempts have been made to produce the original former or mould by computer number controlled (CNC) machining methods, but the cost and time involved in preparing the CNC programme is unattractive.

The present invention therefore sets out to provide a more rapid and accurate means of converting a design for a moulded drill bit, or part thereof, into a mould capable of producing the bit body or part.

It is common practice in the design of drill bits to make use of computer aided design systems and one facility of some such systems is to create within the computer a complete three-dimensional computerised model of the bit body. There are now also currently available solid imaging processes and equipment which employ a three-dimensional computerised model in a computer-controlled process to create a corresponding three-dimensional physical model. A number of such processes are currently available or under development, one of the most established being the process known as stereolithography. The essential features of this process, and other processes for generating a physical object directly from a computerised model, will be briefly described later. However, due to the present limitations of these processes, for example in relation to the cost, the time taken and the material of the finished product, they do not allow the direct manufacture of an actual operative bit body from computer data. The present invention therefore relates to the advantageous application of such processes as a critical step in the manufacture of an operative bit body.

According to one aspect of the present invention there is provided a method of manufacturing a drill bit of the kind first referred to comprising creating a three-dimensional computerised model of the bit body, or a part thereof, employing said computerised model in a computer-controlled process to create a three-dimensional physical model of the bit body, or part thereof, from physical material, using said three-dimensional physical model to form a hollow mould of complementary shape to said bit body, or part thereof, and then moulding in said mould a reproduction of said bit body, or part thereof, in a material suitable for use in an operative drill bit.

The mould may be produced from the three-dimensional physical model by an investment casting method, in which case the model is created from combustible or low melting point material, such as paper or wax, so that it may be readily removed from the mould by burning or melting the model. In this case the mould may be formed from ceramic material which is applied to the physical model in flowable form and is then caused or allowed to solidify before the model is removed by burning or melting.

Alternatively, the three-dimensional physical model may be in the form of a number of separable components so that it may be removed from the mould by removing the components in sequence. In this case the physical model may be segmented into said components after its creation, in one piece, in said computer-controlled process. Alternatively, the three-dimensional computerised model may itself be segmented so as to create a similarly segmented physical model.

According to a second aspect of the invention, a method of manufacturing a drill bit of the kind first referred to comprises creating a three-dimensional computerised model of a hollow mould of complementary shape to the bit body, or a part thereof, employing said computerised model in a computer-controlled process to create a three-dimensional physical model of the hollow mould from physical material, using said physical model to mould a former having the shape of the bit body, or part thereof, using said former to create an operative mould of complementary shape to the former, and then moulding in said mould a reproduction of said bit body, or part thereof, in a material suitable for use in an operative drill bit.

The computerised model of the hollow mould may be created by first creating a three-dimensional computerised model of the bit body, or part thereof, and then subtracting this model from a computerised model of a larger solid body.

For the purposes of removal of the former from the mould, the former may be made of a flexible or disposable material or may be segmented.

The operative mould may be formed from the former using any suitable process, such as investment casting. Thus, as before, the mould may be formed from ceramic material which is applied to the former in flowable form and is then caused or allowed to solidify before the former is removed.

In any of the above arrangements the reproduction of the bit body, or part thereof, may be moulded in the hollow mould from infiltrated matrix material, such as tungsten carbide matrix material infiltrated by a copper alloy, or from steel, stellite or any other material suitable for use in an operative drill bit.

The following is a more detailed description of methods according to the invention, reference being made to the accompanying drawings in which:
Figure 1 is a diagrammatic section through a hollow mould being used in the casting of a bit body using a powder metallurgy process,
Figure 2 is a diagrammatic representation of the stages in one method of producing a mould for the manufacture of a bit body, and
Figure 3 is a similar diagrammatic representation of an alternative method.

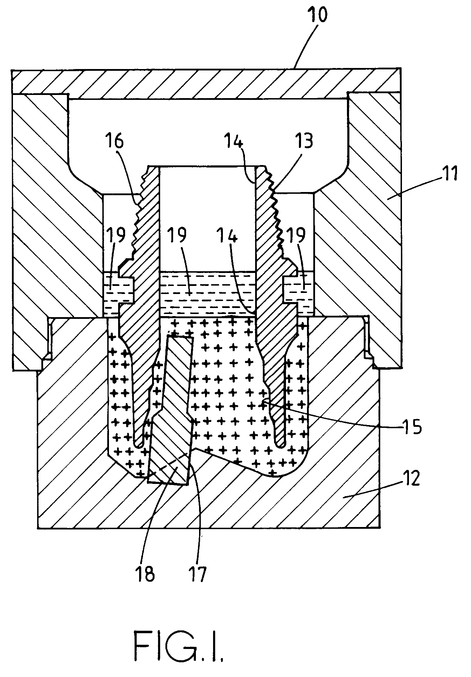

Referring to Figure 1: a two-part mould 10 comprises an upper part 11 and a lower part 12 which has an internal configuration corresponding generally to the required surface shape of the bit body or a portion thereof. For example, the mould part 12 may be formed with elongate recesses to provide radially extending blades upstanding from the surface of the finished bit. In the case where cutters are to be mounted on the bit body after formation thereof, the surface of the mould may be formed with a plurality of sockets each of which receives a former (not shown) which formers, during formation of the bit body define in the bit body sockets to receive the cutters, or studs or posts on which they are mounted.

The matrix material is moulded on and within a hollow steel blank 13. The steel blank is supported in the mould 10 so that its outer surface is spaced from the inner surface of the mould. The blank has an upper cylindrical internal cavity 14 communicating with a lower diverging cavity 15. The upper portion of the blank 13 is formed with a machined external screw thread 16 which will form the threaded shank for connecting the drill bit to the drill string.

There is also provided in the lower mould part 12, at each desired location for a nozzle in the finished bit, a socket 17 which receives one end of an elongate stepped cylindrical nozzle former 18 which extends into the mould space within the lower cavity 15 in the hollow steel blank 13.

After the insertion of the steel blank 13 into the mould, powdered matrix forming material (for example powdered tungsten carbide) is packed around the outside of the steel blank and within the lower diverging cavity 15 of the blank and around the former 16 and any other formers mounted over the internal surface of the mould.

A body of infiltrant alloy, such as a copper alloy, 19 is then located above the matrix forming material both within and around the steel blank 13. After the matrix forming material and infiltrant have been packed into the mould, the filled mould is placed in a furnace and heated to cause the alloy to fuse and infiltrate downwardly through the matrix forming material in known manner. After solidification of the infiltrated matrix material and removal of the bit body from the mould, the formers are removed from the body and the sockets so formed are then ready to receive nozzles and cutters.

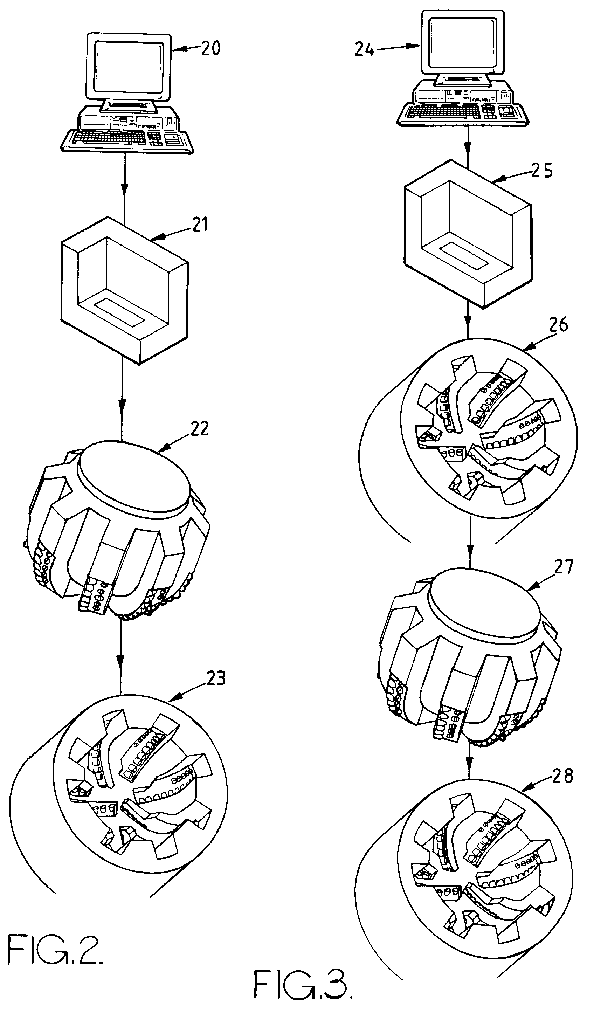

The present invention relates to methods of manufacturing the mould part 12, or similar mould, for the casting of a bit body or a part thereof and Figures 2 and 3 illustrate diagrammatically the stages in two alternative methods in accordance with the invention.

Referring to Figure 2: the first step is the creation of a three-dimensional computerised model of the bit body, or part thereof. This stage is represented by the schematic computer system 20. Software systems for creating such three-dimensional models are well known and do not require to be described in detail.

The computerised model in the computer system 20 is then used to control a solid imaging process and apparatus, indicated diagrammatically at 21, to produce a three-dimensional physical model 22 of the bit body. As previously mentioned, there are a number of alternative systems at present available for generating a physical model directly from a computer model of an object. One such suitable process is that known as stereolithography, and this process, and other similar processes, will be described briefly below.

According to the nature of the solid imaging process employed, the model 22 of the bit body may be formed from a number of different materials, such as plastics, wax, paper or other materials. Generally speaking, however, it is not possible at present to produce, using such a process, a physical model in a material which is suitable for use in an operative drill bit. Consequently, according to the present invention, the model 22 is used as an intermediate stage to produce a mould from which a bit body can be cast in the required materials.

Thus, as indicated diagrammatically in Figure 2, the next stage in the process is to form around the model 22 a mould 23. The mould 23 may be fashioned using any of the processes commonly used for producing a mould from a former. Thus, the mould may be produced by an investment casting process in which case the model 22 requires to be formed of wax, or other low melting point material, or of paper or other combustible or disposable material. Once the mould 23 has been formed around the model 22, the model may be withdrawn from the mould by melting, in the case of wax or other low melting point material, or by burning away the model in the case where it is formed from paper or similar material. This then leaves the mould 23 ready for the manufacture of the bit body, for example by the method described in relation to Figure 1.

In order to withstand the temperatures and stresses to which the mould is subjected in this process, the mould may formed from a ceramic material which is applied to the model 22 in flowable form and is then caused or allowed to solidify before the model 22 is removed.

In an alternative method, the model 22 is cut into appropriately shaped segments before the mould 23 is formed around it. The segments are so shaped that they may be removed in succession from the mould 23 thus enabling them to be reassembled and re-used in the manufacture of further moulds.

Instead of the model 22 being formed in one piece and subsequently segmented the computerised model created in the computer system 20 could itself be segmented so that the solid imaging process 21 directly produces a segmented model ready for use.

In the alternative method represented in Figure 3 there is created in the computer system 24 a three-dimensional computerised model of a hollow mould of complementary shape to the required shape of the bit body, or part thereof For example, the computerised model of the hollow mould may be created by first creating a three-dimensional computerised model of the bit body itself, as in the method of Figure 2, and then subtracting this model from a computerised model of a larger solid block or other body.

A solid imaging process and apparatus 25 is then used to produce a three-dimensional physical model 26 of the mould, and this mould 26 is used, in known manner, to produce a former of rubber or other resilient material 27. The rubber former 27 is then used to create a mould 28, using well known mould forming processes, which is a reproduction of the model 26, but in a material, such as a ceramic material, which is suitable to withstand the temperature and stresses to which the mould must be subjected in producing an operative bit body, for example by the method described in relation to Figure 2.

Instead of being used to produce a resilient former, the mould model 26 might also be used to make a disposable or segmented former for use in the production of an operative mould.

As previously mentioned, a number of alternative solid imaging processes are currently available. The details of such processes do not form a part of the present invention, but a few typical processes will be briefly described to demonstrate the type of process required by the present invention. These processes are as follows:
1. Layer-by-layer stereo lithography - The three-dimensional computer model is sliced into a plurality of thin parallel layers of an appropriate thickness. Under the control of the computer a plate is then electrostatically charged in the image of a layer and toner is deposited on to the electrostatically charged areas of the plate to produce a mask. This mask is applied to the surface of a vat containing a photo-sensitive polymer. The polymer surface is then exposed to light so that a layer of the polymer is solidified where it is not covered by the mask. The layer is milled to an accurate thickness, and the process is repeated for each layer of the computer model, the resulting layers of solidified polymer being bonded one on top of another to build up a full physical model corresponding to the computer model.
2. Point-by-point layer stereo lithography - The computer model is again sliced into layers but in this case a laser beam scans the surface of a photo-sensitive polymer in a vat, the scanning pattern of the laser beam corresponding to the shape of each layer. The surface of the polymer solidifies where scanned by the laser beam. After each layer as been created it is lowered in the vat by a distance corresponding to the thickness of the layer, allowing the next layer of the model to be created by a laser beam scan of the liquid surface. Each layer may be only partly scanned so that the interior of the layer comprises a cross-hatched solid pattern enclosing liquid polymer. The liquid polymer thus trapped in the finished physical model is then subsequently cured.
3. 3D printing/glueing - The computer model is again sliced into layers. Powdered material, such as a ceramic material, is spread over a surface and is scanned by a print head which deposits a binding material on to the surface in a pattern corresponding to the shape of the computer layer. The process is repeated, each layer being formed on the one below it. The completed physical model is then treated in an oven to bond the layers together.
4. 3D welding - In this process a welding head which is infinitely controllable in three dimensions is used to build up welds into a solid object corresponding to the three-dimensional computerised model.
5. Ballistic particle manufacturing - Small droplets of molten material are fired into engagement with one another to build up a physical image of the computerised model. The model may be built up in layers, as in the previous methods, but the process may also be used to assemble an object in three dimensions directly from the computerised model.
6. Beam interference solidification - Two laser beams of different wave lengths, controlled by the computer, are scanned through a vat containing a photo-sensitive monomer. The monomer solidifies where the beams intersect so that by controlling the locus of the intersection a solid object corresponding to the computer model can be built up in the vat.
7. Fused deposition modelling - A heated extrusion head is traversed in two dimensions over a horizontal table. The heated head drops molten material, such as a wax or thermoplastics, on to the table, or on previously solidified material already on the table. The process may be used to build up the object in layers, as above, but may also build an object in three dimension rather than in layers by building up a part of the object in one area before moving on to another area.
8. Laminated object manufacturing - The computerised model is sliced into layers, and layers of paper, cellulose or other sheet laminating material are successively cut into the shape of each layer and bonded together in succession to build up the object. The laminating material may be fed from a roll and may be cut by a laser, the layers being bonded together by heat.
9. Selective laser sintering - The computer model is sliced into layers. A powdered material which is capable of being sintered is spread over a table and is scanned by a laser in a pattern determined by the shape of a layer of the computer model. The laser causes the particles of material to sinter together. Once a layer has been sintered further material is spread on the table to enable the next layer to be formed. Suitable materials may be nylon, polycarbonate, wax polyurethane, ceramics and some metals.

## Claims

1. A method of manufacturing a drill bit of the kind comprising a bit body on which are mounted a plurality of cutters for cutting or abrading the formation being drilled, and an inner passage for supplying fluid to one or more nozzles mounted at the external surface of the bit, the method characterised by the steps of creating a three-dimensional computerised model of the bit body, or a part thereof, employing said computerised model in a computer-controlled process (21) to create a three-dimensional physical model (22) of the bit body, or part thereof, from physical material, using said three-dimensional physical model to form a hollow mould (23) of complementary shape to said bit body (22), or part thereof, and then moulding in said mould a reproduction of said bit body, or part thereof, in a material suitable for use in an operative drill bit.

2. A method according to Claim 1, wherein the mould (23) is produced from the three-dimensional physical model (22) by an investment casting method, in which the model is created from combustible or low melting point material, so that it may be readily removed from the mould by burning or melting the model.

3. A method according to Claim 2, wherein the mould (23) is formed from ceramic material which is applied to the physical model (22) in flowable form and is then caused or allowed to solidify before the model is removed by burning or melting.

4. A method according to Claim 1, wherein the three-dimensional physical model (22) is in the form of a number of separable components so that it may be removed from the mould by removing the components in sequence.

5. A method according to Claim 4, wherein the physical model (22) is segmented into said components after its creation, in one piece, in said computer-controlled process.

6. A method according to Claim 4, wherein the three-dimensional computerised model (22) is segmented so as to create a similarly segmented physical model.

7. A method of manufacturing a drill bit of the kind of the kind comprising a bit body on which are mounted a plurality of cutters for cutting or abrading the formation being drilled, and an inner passage for supplying fluid to one or more nozzles mounted at the external surface of the bit, the method characterised by the steps of creating a three-dimensional computerised model of a hollow mould of complementary shape to the bit body, or a part thereof, employing said computerised model in a computer-controlled process (25) to create a three-dimensional physical model (26) of the hollow mould from physical material, using said physical model (26) to mould a former (27) having the shape of the bit body, or part thereof, using said former (27) to create an operative mould (28) of complementary shape to the former, and then moulding in said mould a reproduction of said bit body, or part thereof, in a material suitable for use in an operative drill bit.

8. A method according to Claim 7, wherein the computerised model of the hollow mould (26) is created by first creating a three-dimensional computerised model of the bit body, or part thereof, and then subtracting this model from a computerised model of a larger solid body.

9. A method according to Claim 7 or Claim 8, wherein for the purposes of removal of the former (27) from the mould the former is made of a flexible or disposable material or is segmented.

10. A method according to any of Claims 7 to 9, wherein the operative mould (28) is formed from the former (27) by investment casting.

11. A method according to Claim 10, wherein the mould (28) is formed from ceramic material which is applied to the former (27) in flowable form and is then caused or allowed to solidify before the former is removed.

12. A method according to any of the preceding claims, wherein the reproduction of the bit body, or part thereof, is moulded in the hollow mould (23, 28) from infiltrated matrix material, such as tungsten carbide matrix material infiltrated by a copper alloy, or from steel, stellite or any other material suitable for use in an operative drill bit.
